# EUROPÄISCHE PATENTANMELDUNG

(11) **EP 4 169 646 A1**
(43) Veröffentlichungstag der Anmeldung: **26.04.2023**
(21) Anmeldenummer: 21204403.6
(22) Anmeldetag: 25.10.2021
(51) Int. Cl.: B23H 3/04, B23H 9/10, B23H 9/00, B23H 11/00

(54) **VERFAHREN UND VORRICHTUNG ZUM EINBRINGEN EINER AUSNEHMUNG IN EIN WERKSTÜCK**

(71) Anmelder: MTU Aero Engines AG, 80995 München (DE); EMAG GmbH & Co. KG, 73084 Salach (DE)
(72) Erfinder: NOLLER, Alexander, 73084 Salach (DE); ROTHAMMEL, Walter, 73084 Salach (DE); OCHS, Waldemar, 73084 Salach (DE); PRIEB, Anton, 73084 Salach (DE); FEILING, Nicole, 80995 München (DE); KARGES, Florian, 80995 München (DE); HUTTNER, Roland, 80995 München (DE); DZEMAJILI, Gazmen, 80995 München (DE)
(74) Vertreter: König Szynka Tilmann von Renesse Patentanwälte Partnerschaft mbB München

(57) **Zusammenfassung**

Die vorliegende Erfindung betrifft ein Verfahren zum Einbringen einer Ausnehmung (3) in ein Werkstück (1), wobei die Ausnehmung (3) mit einer Bearbeitungskathode (2) durch Elektrochemisches Abtragen eingebracht wird, wobei mit dem Abtragen eine die Ausnehmung (3) begrenzende Flanke (1.3) freigelegt wird, die sich von einer ersten Fläche (1.1) des Werkstücks (1) ausgehend in Richtung einer entgegengesetzten zweiten Fläche (1.2) des Werkstücks (1) erstreckt, wobei an zumindest einer der Flächen (1.1, 1.2) beim Abtragen eine Schutzanode (7.1, 7.2) angeordnet wird, welche der Flanke (1.3) zugeordnet ist und in elektrischem Kontakt mit dem Werkstück (1) an der zumindest einen Fläche (1.1, 1.2) anliegt, und wobei die Schutzanode (7.1, 7.2) gegenüber der Flanke (1.3) nach außen, also von der Ausnehmung (3) weg, versetzt ist.

## Beschreibung

### Technisches Gebiet

Die vorliegende Erfindung betrifft ein Verfahren zum Einbringen einer Ausnehmung in ein Werkstück.

### Stand der Technik

Die Ausnehmung wird durch elektrochemisches Abtragen eingebracht (*Electro Chemical Machining*, ECM), also mittels einer Bearbeitungskathode, auch ECM-Kathode genannt. Damit lassen sich auch vergleichsweise harte Werkstoffe materialabtragend bearbeiten, weswegen es in der Herstellung von Bauteilen für axiale Strömungsmaschinen, insbesondere Flugtriebwerke, Anwendung finden kann. Vor diesem Hintergrund können sich besondere Anforderungen an bspw. die Genauigkeit bzw. Reproduzierbarkeit der Werkstückbearbeitung ergeben.

Dies soll das bevorzugte Anwendungsumfeld illustrieren, den vorliegenden Gegenstand aber zunächst nicht in seiner Allgemeinheit beschränken.

### Darstellung der Erfindung

Der vorliegenden Erfindung liegt das technische Problem zugrunde, ein besonders vorteilhaftes Verfahren zum Einbringen einer Ausnehmung in ein Werkstück anzugeben.

Dies wird erfindungsgemäß mit dem Verfahren gemäß Anspruch 1 gelöst. Bei diesem wird die Ausnehmung in an sich bekannter Weise mit der Bearbeitungskathode eingebracht, wird also mit dem Abtragen eine die Ausnehmung begrenzende Flanke freigelegt, die sich von einer ersten Fläche des Werkstücks ausgehend in Richtung einer entgegengesetzten zweiten Fläche davon erstreckt. Erfindungsgemäß wird hierbei an zumindest einer dieser Flächen, also an der ersten und/oder zweiten Fläche, eine Schutzanode angeordnet, diese liegt in elektrischem Kontakt an der zumindest einen Fläche an. Dabei ist die Schutzanode relativ zu der freigelegten, die Ausnehmung seitlich begrenzenden Flanke seitlich nach außen, nämlich von der Ausnehmung weg, versetzt. In anderen Worten fluchtet die Schutzanode in der Vorschubrichtung nicht mit der Flanke, sondern gibt es zwischen der Flanke und einer der Ausnehmung zugewandten, an der mindestens einen Fläche anliegenden Kante der Schutzanode einen Versatz.

Betrachtet man einen Vergleichsfall ohne Schutzanode, so kann es dort an den Kanten der Flanke, also eintrittsseitig zwischen Flanke und erster Fläche und austrittsseitig zwischen Flanke und zweiter Fläche, aus Geometriegründen zu einer Verdichtung der elektrischen Feldlinien und infolgedessen lokalen Erhöhung der Stromdichte kommen. Die Schutzanode, die mit dem Werkstück auf demselben elektrischen Potenzial vorgesehen ist, kann somit z. B. zunächst eine homogenere Verteilung der elektrischen Feldlinien bewirken. Indem sie dabei ferner nicht exakt fluchtend, sondern leicht von der Flanke versetzt platziert wird, lässt sich dann gezielt eine Verrundung der jeweiligen Kante zwischen Flanke und Fläche beeinflussen bzw. einstellen.

Etwas vereinfacht dargestellt kann mit einem größeren Versatz eine stärkere Verrundung und mit einem kleineren Versatz eine kleinere Verrundung erreicht werden, jedenfalls soweit man ein ansonsten gleiches Abtragverhalten unterstellt (siehe dazu unten im Detail). Dies kann, etwa im Vergleich zu anderen materialabtragenden Verfahren, z. B. durch Drahtfunkenerosion oder Räumen, die jeweils einen scharfkantigen Übergang erzeugen und nachgelagert einen gesonderten Verrundungsschritt (z. B. durch Fräsen) erfordern, eine Integration von Prozessschritten erlauben. Im Vergleich zu einem Elektrochemischen Abtragen, bei dem eine Verrundung bspw. allein über eine Veränderung der Abtragparameter eingestellt würde, kann der vorliegende Ansatz z. B. hinsichtlich der Genauigkeit von Vorteil sein.

Bevorzugte Ausgestaltungen finden sich in den abhängigen Ansprüchen und der gesamten Offenbarung, wobei in der Darstellung der Merkmale nicht immer im Einzelnen zwischen Vorrichtungs- und Verfahrens- bzw. Verwendungsaspekten unterschieden wird; jedenfalls implizit ist die Offenbarung hinsichtlich sämtlicher Anspruchskategorien zu lesen. Sie betrifft insbesondere stets gleichermaßen das Arbeitsverfahren zum Einbringen der Ausnehmung und auch ein Herstellungsverfahren, bei dem aus dem Werkstück durch das Einbringen der Ausnehmung ein Bauteil hergestellt wird, insbesondere für eine Strömungsmaschine bzw. ein Flugtriebwerk.

Die Ausnehmung wird von der ersten Fläche ausgehend in einer Vorschubrichtung in das Werkstück eingebracht, die erste Fläche stellt also die Eintritts- bzw. Startfläche dar. Im Allgemeinen muss sich die vollständig eingebrachte Ausnehmung nicht durch das Werkstück hindurch erstrecken, sondern kann sie innerhalb davon enden (wie ein Sackloch). Bevorzugt durchsetzt sie das Werkstück jedoch durchgehend bis zur entgegengesetzten zweiten Seite, stellt diese also eine Austritts- bzw. Endfläche dar. In diesem Fall wird bevorzugt sowohl an der ersten als auch an der zweiten Fläche jeweils eine der Flanke zugeordnete Schutzanode vorgesehen, also eine erste Schutzanode an der ersten Fläche und eine zweite Schutzanode an der zweiten Fläche. Soweit nachstehend generisch auf die "Schutzanode" und "mindestens einen Fläche" Bezug genommen wird, ist dies sowohl auf die erste Schutzanode / erste Fläche als auch auf die zweite Schutzanode / zweite Fläche zu lesen.

In geometrischer Betrachtung kann die Ausnehmung eine prismatische Kontur sein, die sich durch Parallelverschiebung einer Ausgangskontur der Bearbeitungskathode in Vorschubrichtung ergibt. Die Vorschubrichtung liegt bevorzugt senkrecht zur ersten und/oder zweiten Fläche. Im Allgemeinen kann das Werkstück durch das Einbringen der Ausnehmung auch aufgetrennt, also in separate Teile zerlegt werden; bevorzugt bleibt das Werkstück beim Einbringen der Ausnehmung jedoch ein integral zusammenhängendes Teil.

Die Schutzanode liegt an der zumindest einen Fläche des Werkstücks an (die erste Schutzanode an der ersten und/oder die zweite Schutzanode an der zweiten Fläche), es besteht also eine elektrisch leitende Kontaktfläche dazwischen. In Einzelnen kann der Versatz zwischen Flanke und Schutzanode dann zwischen dieser Kontaktfläche und der Flanke genommen werden, und zwar in einer Flächenrichtung. Soweit generell auf eine "Flächenrichtung" Bezug genommen wird, liegt diese parallel zu ersten und/oder zweiten Fläche und bevorzugt senkrecht zur Flanke. In Flächenrichtung begrenzt die Flanke die Ausnehmung (und ist die Schutzanode nach außen versetzt).

Der in Flächenrichtung genommene Versatz kann in absoluten Werten bspw. mindestens 0,1 mm, bevorzugt mindestens 0,2 mm, ausmachen, wobei mögliche Obergrenzen z. B. bei höchstens 3 mm, 2,5 mm, 2 mm, 1,5 mm, 1 mm bzw. 0,8 mm liegen können.

Wie erwähnt, gehen die Flanke und die zumindest eine Fläche, an der die Schutzanode anliegt, bevorzugt mit einer Verrundung ineinander über. Im Falle der ersten Fläche wird diese zu Beginn des Abtragprozesses eingebracht ("erste Verrundung"), an der zweiten Fläche hingegen beim Austritt der Bearbeitungskathode, also zu Ende des Abtragprozesses ("zweite Verrundung"). In einem zu der Flanke und der mindestens einen Fläche senkrechten Schnittebene betrachtet hat die Verrundung bevorzugt einen ausschließlich konvexen Verlauf (bspw. ohne Wendepunkt bzw. konkaven Abschnitt). In bevorzugter Ausgestaltung reicht die Verrundung in dem Schnitt betrachtet bis zu der Schutzanode, dort geht sie bevorzugt tangential in die mindestens eine Fläche über.

Gemäß einer bevorzugten Ausführungsform ist der Versatz, den die Schutzanode entlang der Flanke hat, nicht konstant. Der jeweilige Versatz kann bspw. in einem zu der Flanke und mindestens einen Fläche senkrechten Schnitt an der jeweiligen Stelle genommen werden. Die Variation "entlang der Flanke" meint dann, dass sich in zumindest einigen der Schnittebenen der Versatz unterscheidet (dabei kann es trotz der Variation auch Abschnitte mit konstantem Versatz geben). Im Allgemeinen kann mit dem variierenden Versatz bspw. gezielt ein entsprechender Verrundungsverlauf eingestellt werden, also in einem Abschnitt mit größerem Versatz eine stärkere und in einem Abschnitt mit kleinerem Versatz eine geringere Verrundung.

In bevorzugter Ausgestaltung wird die Variation jedoch zur Kompensation eines variierenden Abtragverhaltens genutzt, wird also in einem Abschnitt der Flanke, in dem das Abtragverhalten an sich erhöht ist (z. B. geometrie- oder strömungsbedingt), ein kleinerer Versatz eingestellt. In einem Bereich mit im Vergleich dazu geringerem Abtragverhalten wird hingegen ein im Vergleich größerer Versatz eingestellt, sodass der Versatz das unterschiedliche Abtragverhalten ausgleicht und im Ergebnis eine im Wesentlichen gleiche Verrundung resultiert. Eine "im Wesentlichen" gleiche bzw. konstante Verrundung kann insbesondere meinen, dass diese gleich weit in die mindestens eine Fläche und/oder die Flanke hineinreicht, besonders bevorzugt sind die in den jeweiligen Schnitten betrachteten Verrundungsverläufe deckungsgleich.

Gemäß einer bevorzugten Ausführungsform fasst die Schutzanode die Flanke in einer Aufsicht betrachtet über deren gesamte Erstreckung nach außen, von der Ausnehmung weg ein (mit variierendem oder auch konstantem Versatz). Dabei kann die Schutzanode bevorzugt ein für sich einstückiger, im Allgemeinen aber auch ein segmentierter Körper sein.

Die Schutzanode ist aus einem elektrochemisch stabilen Material vorgesehen, in bevorzugter Ausgestaltung ist das Schutzanodenmaterial elektrochemisch edler als das metallische Material des Werkstücks. Bevorzugt kann die Schutzanode zumindest eine Platinbeschichtung aufweisen (platiniert sein), besonders bevorzugt ist sie insgesamt aus Platin vorgesehen. Unabhängig von der Umsetzung im Einzelnen, die auch von dem Metall des Werkstücks abhängen kann, bleibt die Schutzanode beim Einbringen der Ausnehmung bevorzugt unverändert bestehen, erfolgt also kein Materialabtrag von der Schutzanode. Die Schutzanode wird beim Einbringen der Ausnehmung in das Werkstück nicht durchtrennt oder aufgelöst, sie kann also mehrfach verwendet werden (zur sequenziellen Bearbeitung mehrerer Werkstücke).

Bei einer bevorzugten Ausführungsform ist an der ersten und/oder zweiten Fläche neben der Schutzanode zusätzlich eine Schutzelektrode angeordnet, und zwar elektrisch isoliert von der Schutzanode und dem Werkstück. Insbesondere kann an der ersten Fläche eine erste Schutzelektrode und an der zweiten Fläche eine zweite Schutzelektrode vorgesehen sein. Die jeweilige Schutzelektrode kann über einen Festkörperisolator oder bspw. auch Luftspalt von der jeweiligen Fläche beabstandet und isoliert sein. In Aufsicht betrachtet kann zwischen der Schutzanode und der Schutzelektrode ein Isolator (Festkörperisolator) vorgesehen sein. Die Schutzelektrode ist bzw. wird wie das Bauteil und die Schutzanode positiv geladen, im Verhältnis dazu aber stärker. Es wird also ein höheres elektrisches Potenzial als an das Werkstück angelegt, sodass sich die elektrischen Feldlinien im abfließenden Elektrolytkanal vorranging zwischen der Bearbeitungskathode und der Schutzelektrode ausbilden, und nicht zwischen der Bearbeitungskathode und der ersten und/oder zweiten Fläche des Werkstücks.

Mit "abfließenden Elektrolytkanal" ist der aus dem Arbeitsspalt austretende Elektrolytstrom gemeint, der in umliegenden Bereichen zu lokalem oder auch flächigem unerwünschten Abtrag bzw. Anätzungen (sog. "Pittings") führen kann, also zu parasitärem Streuabtrag. Beim Abtragen können sich die ersten und zweite Fläche bereits im bearbeiteten Zustand, insbesondere im endbearbeiteten Zustand befinden, und etwaige Beschädigungen dort müssten unter hohem Aufwand nachbearbeitet werden oder würden schlimmstenfalls zu Ausschuss führen. Bevorzugt werden sowohl die erste also auch die zweite Fläche geschützt.

In bevorzugter Ausgestaltung bedecken die Schutzanode, die Schutzelektrode und der dazwischen angeordnete Isolator einen Bearbeitungsbereich des Werkstücks vollständig. Der "Bearbeitungsbereich" ist dabei jener Bereich außerhalb der Ausnehmung, der während des Einbringens der Ausnehmung in Kontakt mit dem Elektrolyt kommen kann, also innerhalb einer Bearbeitungskammer angeordnet ist.

In bevorzugter Ausgestaltung wird, jeweils in elektrisch leitender Anlage, an der ersten Fläche eine erste Schutzanode und an der zweiten Fläche eine zweite Schutzanode platziert (siehe vorne). Bevorzugt sind dabei sowohl die erste als auch die zweite Schutzanode zur Flanke nach außen versetzt, wird also sowohl in der ersten als auch in der zweiten Fläche jeweils eine Verrundung eingestellt. Die erste und zweite Fläche können insbesondere parallel zueinander liegen, wobei in einer jeweiligen Schnittebene (senkrecht zur Flanke und zur ersten und zweiten Fläche) der jeweilige Versatz der ersten und zweiten Schutzanode gleich groß oder auch unterschiedlich sein kann. Letzteres kann bspw. ein an der ersten und zweiten Fläche, also beim Ein- und Austritt unterschiedliches Abtragverhalten kompensieren, also der Einstellung einer im Wesentlichen gleichen Verrundung dienen (vgl. dazu die vorstehenden Definitionen).

Gemäß einer bevorzugten Ausführungsform ist die Bearbeitungskathode Teil eines Bearbeitungswerkzeugs, wobei dieses zusätzlich eine Bearbeitungswerkzeug-Schutzelektrode aufweist. Bezogen auf die Vorschubrichtung kann die Bearbeitungskathode vorne am Werkzeug und die Schutzelektrode dahinter angeordnet sein, dazwischen ist bevorzugt ein Isolator (Festkörperisolator) vorgesehen. Die Bearbeitungswerkzeug-Schutzelektrode wird beim Einbringen der Ausnehmung gemeinsam mit der Bearbeitungskathode bewegt, bspw. mit fortschreitendem Abtrag in die Ausnehmung hinein. Die Werkzeug-Schutzelektrode wird mit gleichem Vorzeichen wie das Werkstück geladen, aber bevorzugt mit einem höheren elektrischen Potenzial. Dies kann bspw. elektrische Feldlinien an dem bereits freigelegten Abschnitt der Flanke reduzieren und so einem parasitären Abtrag dort vorbeugen.

Die Erfindung betrifft auch ein Verfahren zum Herstellen eines Bauteils für eine axiale Strömungsmaschine, insbesondere für ein Flugtriebwerk. Dabei wird das Bauteil aus einem Werkstück hergestellt, in das gemäß der vorliegenden Offenbarung eine Ausnehmung eingebracht wird.

In bevorzugter Ausgestaltung ist die Ausnehmung eine Profilnut zur formschlüssigen Aufnahme einer komplementären Form, insbesondere kann das Bauteil eine Laufscheibe und die Ausnehmung eine Schaufelfußaufnahme sein. Zur Herstellung eines Laufschaufelkranzes kann in diese dann ein Schaufelfuß eingesetzt werden, der das Schaufelblatt trägt. Umlaufend aufeinander folgend sind dabei mehrere Laufschaufeln vorgesehen, werden also entsprechend auch mehrere Ausnehmungen/Schaufelfußaufnahmen in die Laufscheibe eingebracht. Das vorliegend offenbarte Verfahren kann hierbei vorteilhaft dahingehend zum Tragen kommen, dass die Verrundungen definiert eingebracht werden können (Reproduzierbarkeit) und entsprechend Nachbearbeitungsaufwand bzw. Ausschuss reduziert wird, was speziell in Anbetracht der Materialien und Größe einer Laufscheibe ansonsten erhebliche Kosten bedeuten könnte.

Die Erfindung betrifft auch die Verwendung einer Bearbeitungskathode und/oder einer Schutzanode in einem vorliegend offenbarten Verfahren, also deren sinnfällige Herrichtung für die entsprechende Verfahrensweise.

Ferner betrifft die Erfindung eine Vorrichtung zum Einbringen einer Ausnehmung in einer vorliegend geschilderten Weise. Die Vorrichtung weist insbesondere die Bearbeitungskathode und die Schutzanode auf, ferner ist sie bspw. zum Versetzen der Bearbeitungskathode in einer Vorschubrichtung eingerichtet und weist sie eine Bearbeitungskammer auf, in der das Werkstück angeordnet und mit dem Elektrolyten umspült werden kann. Die Bearbeitungskathode und die Schutzanode sind aneinander angepasst, haben nämlich in einer zur Vorschubrichtung senkrechten Schnittebene betrachtet ein komplementäres Profil, mit einem dem Versatz entsprechenden Abstand dazwischen. Das von der Schutzanode definierte Profil ist also etwas größer als jenes der Bearbeitungskathode.

### Kurze Beschreibung der Zeichnungen

Im Folgenden wird die Erfindung anhand von Ausführungsbeispielen näher erläutert, wobei die einzelnen Merkmale im Rahmen der nebengeordneten Ansprüche auch in anderer Kombination erfindungswesentlich sein können und auch weiterhin nicht im Einzelnen zwischen den unterschiedlichen Anspruchskategorien unterschieden wird.

Im Einzelnen zeigt
- Figur 1: eine in ein Werkstück eingebrachte Ausnehmung in einem schematischen Schnitt;
- Figur 2: eine Detailansicht zu Figur 1, in einem früheren Verfahrensstadium;
- Figur 3: eine Anordnung mit im Vergleich zu Figur 2 verändertem Versatz, zur Erzeugung einer stärkeren Verrundung;
- Figur 4: eine beim Einbringen einer Profilnut genutzte Schutzanode in einer Aufsicht;
- Figur 5: ein Flugtriebwerk in einem schematischen Längsschnitt.

### Bevorzugte Ausführung der Erfindung

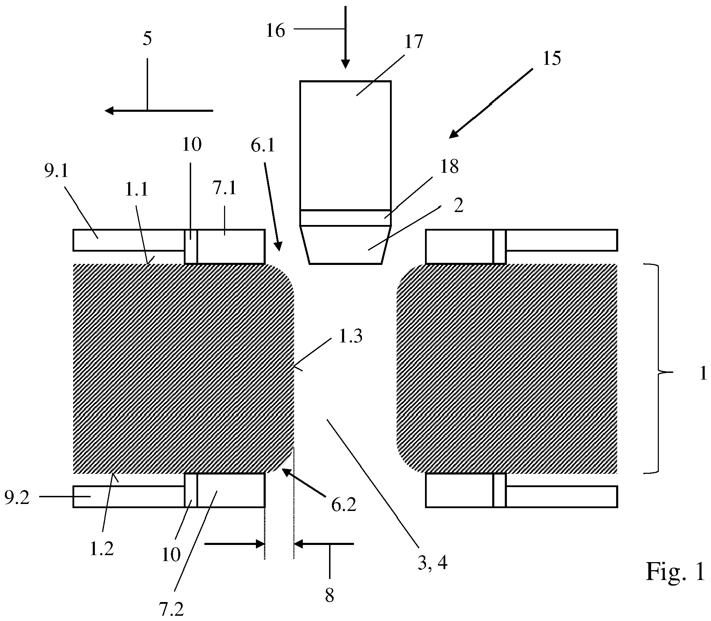

**Fig. 1** zeigt ein Werkstück 1, in das mit einer Bearbeitungskathode 2 eine Ausnehmung 3 eingebracht wurde, vorliegend ein Durchgangsloch 4. Die Ausnehmung 3 bzw. das Durchgangsloch 4 wurde von einer ersten Fläche 1.1 des Werkstücks 1 ausgehend eingebracht (Eintrittsfläche) bis die Bearbeitungskathode 2 an einer entgegengesetzten zweiten Fläche 1.2 des Werkstücks 1 hervorgetreten ist. Figur 1 zeigt die Bearbeitungskathode 2 nach dem Einbringen, also im bereits wieder zurückgezogenen Zustand.

In einer Flächenrichtung 5 wird die Ausnehmung 3 von einer Flanke 1.3 begrenzt, wobei diese jeweils mit einer Verrundung 6.1, 6.2 in die erste und zweite Fläche 1.1, 1.2 übergeht. Diese definierte Verrundung 6.1, 6.2 wird jeweils mit einer Schutzanode 7.1, 7.2 eingestellt, die jeweils flächig elektrisch leitend an der jeweiligen Fläche 1.1, 1.2 anliegt. Im Detail ist an der ersten Fläche 1.1 eine erste Schutzanode 7.1 und an der zweiten Fläche 1.2 eine zweite Schutzanode 7.2 angeordnet, wobei diese auf demselben elektrischen Potenzial wie das Werkstück 1 liegen, also während des Abtragprozesses positiv geladen sind. Der Übersichtlichkeit halber ist in Figur 1 überwiegend die linken Bildhälfte mit Bezugszeichen referenziert, der Aufbau in der rechten Bildhälfte ist aber baugleich, insbesondere symmetrisch.

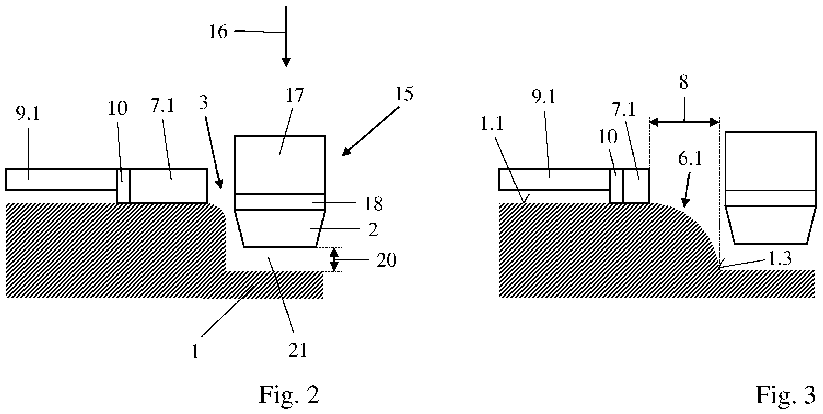

Die Schutzanoden 7.1, 7.2, die vorliegend aus Platin vorgesehen sind, homogenisieren die Feldverteilung, und es kann gezielt die gewünschte Verrundung 6.1, 6.2 eingestellt werden (vgl. auch die Figuren 2 und 3 zur Illustration). Letzteres wird erreicht, indem die Schutzanoden 7.1, 7.2 nicht fluchtend mit der Flanke 1.3, sondern nach außen, in der Flächenrichtung 5 von der Ausnehmung 3 weg versetzt angeordnet sind. Vorliegend ist ein jeweiliger Versatz 8 an der ersten und zweiten Fläche 1.1, 1.2 identisch, er könnte aber auch unterschiedlich groß eingestellt werden.

Zum Schutz der ersten und zweiten Fläche 1.1, 1.2 ist ferner eine jeweilige Schutzelektrode 9.1, 9.2 vorgesehen, nämlich ein erste Schutzelektrode 9.1 an der ersten Fläche 1.1 und ein zweite Schutzelektrode 9.2 an der zweiten Fläche 1.2. Die Schutzelektroden 9.1, 9.2 sind jeweils zum Werkstück 1 und auch zur Schutzanode 7.1, 7.2 isoliert, letzteres über einen jeweiligen Isolator 10. Während des Abtragen werden die Schutzelektroden 9.1, 9.2 mit gleichem Vorzeichen wie das Werkstück 1, jedoch mit höherem Potenzial beaufschlagt. Dies kann einem parasitären Streuabtrag an der ersten und zweiten Fläche 1.1, 1.2 vorbeugen, vergleiche die Beschreibungseinleitung im Einzelnen.

Die Bearbeitungskathode 2 ist Teil eines Bearbeitungswerkzeugs 15, das beim Bearbeiten in der Vorschubrichtung 16 bewegt wird. Das Bearbeitungswerkzeug 15 weist ferner eine Werkzeug-Schutzelektrode 17 auf, die über einen Isolator 18 von der Bearbeitungskatode 2 isoliert ist. Beim Abtragen wird die Werkzeug-Schutzelektrode 17 mit einem positiven Potenzial beaufschlagt, und zwar höher als das Werkstück 1 und die Schutzanoden 7.1, 7.2, z. B. in etwa den Schutzelektroden 9.1, 9.2 vergleichbar. Damit kann bspw. einem parasitären Abtrag an der Flanke 1.3 vorgebeugt werden.

Fig. 2 zeigt einen Figur 1 vorgelagerten Prozessschritt, nämlich während des Einbringens der Ausnehmung 3. Zwischen der Bearbeitungskathode 2 und dem Werkstück 1 erfolgt der Materialabtrag in einem Arbeitsspalt 20 in einer Elektrolytlösung 21, die dabei nicht nur in der Ausnehmung 3 vorliegt, sondern auch Bereiche außerhalb umspült, die deshalb in einer vorstehend geschilderten Weise geschützt werden. Generell werden im Rahmen der vorliegenden Offenbarung die gleichen Bezugszeichen für gleiche Teile bzw. Teile mit gleicher Funktion verwendet und wird insofern auch auf die Ausführungen zu den jeweilig anderen Figuren verwiesen.

**Fig. 3** illustriert eine Anordnung, bei welcher die erste Schutzanode 7.1 im Vergleich zu Figur 2 mit einem größeren Versatz 8 zu der Flanke 1.3 vorgesehen ist, folglich also eine stärkere Verrundung 6.1 erreicht wird.

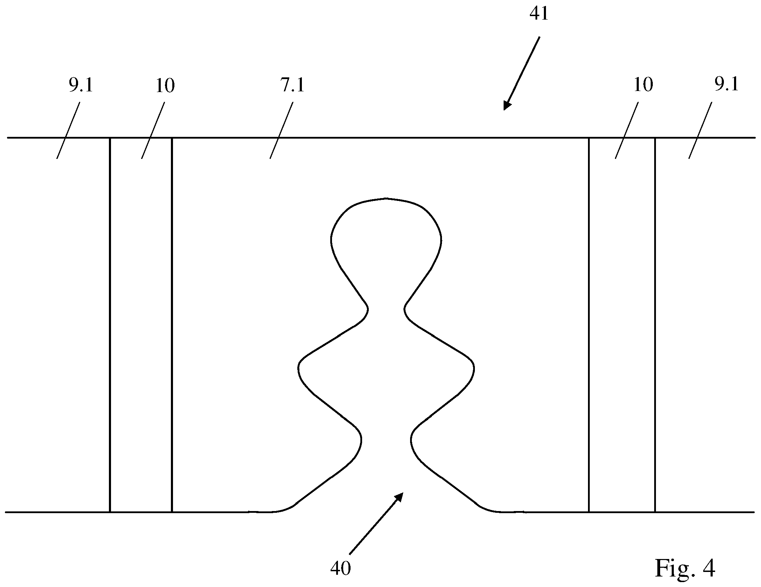

**Fig. 4** zeigt die erste Schutzanode 7.1 in einer Aufsicht, welche die Ausgestaltung der Ausnehmung als Profilnut 40 erkennen lässt (z. B. sogenanntes Tannenbaumprofil). Mit einer Bearbeitungskatode mit komplementärem Profil lässt sich dann die entsprechende Ausnehmung einbringen, im vorliegenden Beispiel als axiale Profilnut in einer Laufscheibe. Neben der ersten Schutzanode 7 sind in Figur 4 der Isolator 10 und die erste Schutzelektrode 9.1 zu erkennen. Gemeinsam mit der ersten Schutzanode 7.1 bedecken diese einen Bearbeitungsbereich 41.

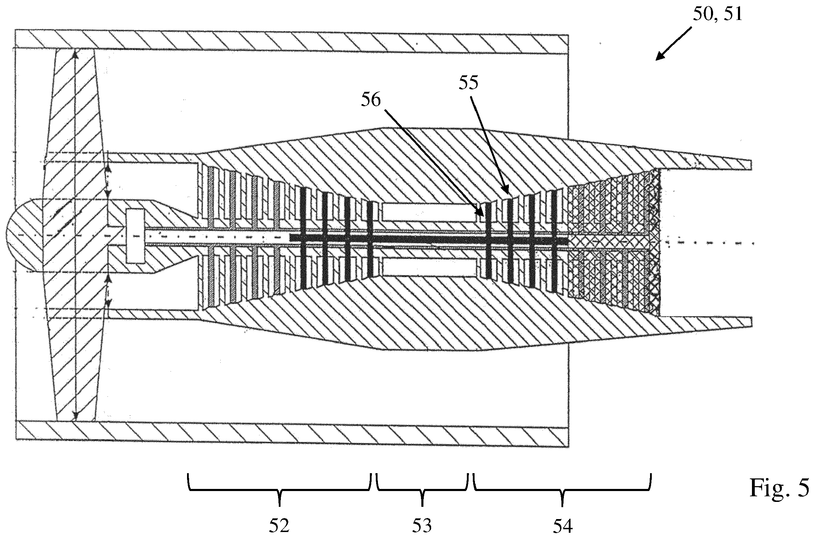

**Fig. 5** zeigt eine Strömungsmaschine 50, vorliegend ein Flugtriebwerk 51. Dieses gliedert sich funktional in Verdichter 52, Brennkammer 53 und Turbine 54. Im Betrieb wird angesaugte Luft im Verdichter 52 komprimiert und in der nachgelagerten Brennkammer 53 mit hinzugemischtem Kerosin verbrannt, wobei das entstehende Heißgas in der Turbine 54 expandiert wird. Sowohl der Verdichter 52 als die Turbine 54 weisen jeweils mehrere Stufen mit einem Leit- und einem Laufschaufelkranz auf. Dabei kann ein solcher Laufschaufelkranz, exemplarisch für die Turbine 54 mit dem Bezugszeichen 55 referenziert, aus einer jeweiligen Laufscheibe 56 aufgebaut werden, in die umlaufend verteilt in einer vorliegend geschilderten Weise durch Elektrochemisches Abtragen Profilnuten 40 eingebracht und anschließend mit Laufschaufeln bestückt werden.

**BEZUGSZEICHENLISTE**

| | |
|---|---|
| Werkstück | 1 |
| ersten Fläche des Werkstücks | 1.1 |
| entgegengesetzten zweite Fläche des Werkstücks | 1.2 |
| Flanke | 1.3 |
| Bearbeitungskathode | 2 |
| Ausnehmung | 3 |
| Durchgangsloch | 4 |
| Flächenrichtung | 5 |
| Verrundung | 6.1, 6.2 |
| erste Schutzanode | 7.1 |
| zweite Schutzanode | 7.2 |
| Versatz | 8 |
| erste Schutzelektrode | 9.1 |
| zweite Schutzelektrode | 9.2 |
| Isolator | 10 |
| Bearbeitungswerkzeug | 15 |
| Vorschubrichtung | 16 |
| Werkzeug-Schutzelektrode | 17 |
| Isolator (der Werkzeug-Schutzelektrode) | 18 |
| Profilnut | 40 |
| Bearbeitungsbereich | 41 |
| Strömungsmaschine | 50 |
| Flugtriebwerk | 51 |
| Verdichter | 52 |
| Brennkammer | 53 |
| Turbine | 54 |
| Bezugszeichen | 55 |
| Laufscheibe | 56 |

## Patentansprüche

1. Verfahren zum Einbringen einer Ausnehmung (3) in ein Werkstück (1),
wobei die Ausnehmung (3) mit einer Bearbeitungskathode (2) durch Elektrochemisches Abtragen eingebracht wird,
wobei mit dem Abtragen eine die Ausnehmung (3) begrenzende Flanke (1.3) freigelegt wird, die sich von einer ersten Fläche (1.1) des Werkstücks (1) ausgehend in Richtung einer entgegengesetzten zweiten Fläche (1.2) des Werkstücks (1) erstreckt,
wobei an zumindest einer der Flächen (1.1, 1.2) beim Abtragen eine Schutzanode (7.1, 7.2) angeordnet wird, welche der Flanke (1.3) zugeordnet ist und in elektrischem Kontakt mit dem Werkstück (1) an der zumindest einen Fläche (1.1, 1.2) anliegt,
und wobei die Schutzanode (7.1, 7.2) gegenüber der Flanke (1.3) nach außen, also von der Ausnehmung (3) weg, versetzt ist.

2. Verfahren nach Anspruch 1, bei welchem die zumindest eine Fläche (1.1, 1.2) und die Flanke (1.3) mit einer Verrundung (6.1, 6.2) ineinander übergehen, die in einem zu der Flanke (1.3) und der mindestens einen Fläche (1.1) senkrechten Schnitt betrachtet bis zu der Schutzanode (7.1, 7.2) reicht.

3. Verfahren nach Anspruch 1 oder 2, bei welchem entlang der Flanke (1.3) ein jeweiliger Versatz (8) den die Schutzanode (7.1, 7.2) an einer jeweiligen Stelle von der Flanke (1.3) hat, variiert.

4. Verfahren nach Anspruch 3, bei welchem die zumindest eine Fläche (1.1, 1.2) und die Flanke (1.3) an der jeweiligen Stelle mit einer jeweiligen Verrundung (6.1, 6.2) ineinander übergehen, wobei die Verrundung (6.1, 6.2) entlang der Flanke (1.3) im Wesentlichen konstant ist.

5. Verfahren nach einem der vorstehenden Ansprüche, bei welchem die Schutzanode (7.1, 7.2) in einer Aufsicht auf die zumindest eine Fläche (1.1, 1.2) betrachtet die Flanke (1.3) über ihre gesamte Erstreckung nach außen einfasst.

6. Verfahren nach einem der vorstehenden Ansprüche, bei welchem die Schutzanode (7.1, 7.2) aus einem im Verhältnis zu dem Werkstück (1) elektrochemisch edleren Material vorgesehen ist.

7. Verfahren nach einem der vorstehenden Ansprüche, bei welchem an der zumindest einen Fläche (1.1, 1.2) neben der Schutzanode (7.1, 7.2) eine Schutzelektrode (9.1, 9.2) angeordnet ist, die von der Schutzanode (7.1, 7.2) und dem Werkstück (1) elektrisch isoliert ist.

8. Verfahren nach Anspruch 7, bei welchem die zumindest eine Fläche (1.1, 1.2) in einem Bearbeitungsbereich (41) von der Schutzanode (7.1, 7.2), der Schutzelektrode (9.1, 9.2) und einem dazwischen angeordneten Isolator (10) vollständig bedeckt wird.

9. Verfahren nach einem der vorstehenden Ansprüche, bei welchem der Flanke (1.3) beidseits jeweils eine Schutzanode (7.1, 7.2) zugeordnet wird, also an der ersten und der zweiten Fläche (1.1, 1.2) des Werkstücks (1).

10. Verfahren nach einem der vorstehenden Ansprüche, bei welchem die Bearbeitungskathode (2) Teil eines Bearbeitungswerkzeugs (15) ist, welches zusätzlich eine Werkzeug-Schutzelektrode (17) aufweist.

11. Verfahren zum Herstellen eines Bauteils für eine axiale Strömungsmaschine (50) aus einem Werkstück (2), wobei in das Werkstück (2) in einem Verfahren nach einem der vorstehenden Ansprüche eine Ausnehmung (3) eingebracht wird.

12. Verfahren nach Anspruch 11, bei welchem die Ausnehmung (3) eine Profilnut (40) zur formschlüssigen Aufnahme einer komplementären Form ist.

13. Verfahren nach Anspruch 11 oder 12, bei welchem das Bauteil eine Laufscheibe (56) und die Ausnehmung (3) eine Schaufelfußaufnahme ist.

14. Verwendung einer Bearbeitungskathode (2) und/oder einer Schutzanode (7.1, 7.2) in einem Verfahren nach einem der vorstehenden Ansprüche.

15. Vorrichtung zum Einbringen einer Ausnehmung (3) in ein Werkstück (1), insbesondere in einem Verfahren nach einem der Ansprüche 1 bis 10, welche eine Bearbeitungskathode (2) zum Elektrochemischen Abtragen in einer Vorschubrichtung (16) und eine Schutzanode (7.1, 7.2) zum Anordnen an zumindest einer Fläche (1.1, 1.2) eines Werkstücks (1) aufweist, wobei die Bearbeitungskathode (2) in einer zu der Vorschubrichtung (16) senkrechten Ebene ein Profil definiert und die Schutzanode (7.1, 7.2) ein dazu komplementäres, aber größeres Profil hat.
